# EUROPEAN PATENT SPECIFICATION

(11) **EP 0 333 688 B1**
(45) Date of publication and mention of the grant of the patent: **29.05.1996**
(21) Application number: 89850084.8
(22) Date of filing: 13.03.1989
(51) Int. Cl.: D21G 1/02, D21F 5/02

(54) **Roll or cylinder for a paper machine or for a paper finishing machine**
Rolle oder Zylinder für eine Papiermaschine oder für eine Maschine zur Fertigung von Papier
Rouleau ou cylindre pour une machine à papier ou pour une machine de finissage du papier

(30) Priority: 14.03.1988 FI 881196
(43) Date of publication of application: 20.09.1989
(73) Proprietor: VALMET CORPORATION, FIN-00620 Helsinki (FI)
(72) Inventor: Eskelinen, Juhani, SF-40630 Jyväskylä (FI)
(74) Representative: Rostovanyi, Peter

(56) References cited:
- EP-A- 0 210 388
- DE-A- 2 902 956
- DE-A- 3 014 891
- US-A- 3 838 734

## Description

The invention concerns a roll or cylinder for a paper machine or for a paper finishing machine, in particular a calender roll, which can be heated.

Heated rolls are used in calendering immediately after drying or, in some cases, also in treatment taking place in the middle of drying. Moreover, heated rolls can also be used in supercalendering, which is a paper finishing step separate from the paper machine. Some of the calender rolls are often provided with steam heating, because the temperature of the rolls affects the calendering so that a high temperature improves the smoothness. Moreover, in the paper web, variations occur which are derived from the wet end of the paper machine and from the drying section. One mode of compensating for these defects is regulation of the temperature of the rolls at different points of the mantle in the transverse direction of the web.

As an inventive idea, a heated roll is not new, but such rolls-have occurred in prior-art solutions, in particular in calendering solutions. The present invention is, however, novel and differs from prior-art solutions as well as provides a considerable improvement.

One solution is suggested in the DE Published Patent Application No. 2,902,956 on which the preamble of claim 1 is based. This solution comprises a roll which is provided with a stationary axle and with a mantle journalled on said axle, which said mantle can be heated from inside over almost all of its length by means of jets. The cooling of the ends of the roll mantle is not arranged separately, and the roll is provided with means for control of the deflection of the roll.

In another prior-art solution, which is described in the FI Patent Application No. 853223, a roll is suggested which is provided with a stationary axle and with a mantle journalled on said axle, which said mantle can be heated from inside by means of hot oil introduced through the intermediate space between the mantle and the axle. Moreover, the ends of the roll mantle can be cooled by means of an oil flow coming from the bearings. The roll is provided with means for control of the deflection of the roll.

Further, corresponding prior-art solutions of heated rolls are described, e.g., in the Patent Applications FI-870989 and FI-862974. These comprise a roll that is provided with a stationary axle and with a mantle journalled on said axle, which said mantle can be heated from inside by means of a flow of oil. The cooling of the ends of the roll mantle is carried out by means of the colder lubrication oil of the bearings.

In the prior-art solutions, various problems have occurred, for example, one end of the roll is warmer than the other, whereby the mantle becomes conical, which causes different calendering properties in the transverse direction of the paper web. Moreover, in the case of heated rolls, one problem is an uneven temperature of the mantle and deformations caused by the uneven temperature in the end regions of the mantle. Thus, an uneven temperature causes an uneven calendering of the paper web as well as defects in the shape of the mantle, which defects are also seen as defects in the paper web. Moreover, when hot liquid is fed into one end of the roll while the removal of the cooled liquid takes place through the other end of the roll, the temperature profile of the roll is declining, which results in different calendering properties in the transverse direction of the web.

One prior-art solution is provided with perforated mantles, wherein the direction of flow of the liquid contained in the mantle can be chosen freely. Such a solution is expensive and causes a certain unevenness in the face as well as non-circularity of the mantle and oscillations.

DE-A-30 14 891 discloses a roll for a paper machine into which roll fluids for controlling the temperature of the roll ends are introduced substantially axially of the roll through ducts in the roll mantle journals.

EP-A-0 210 388 discloses a cooling circuit for the bearing of the roll mantle on the axis of a paper machine cylinder or roll, said cooling circuit being separated from a heating circuit for the roll mantle.

The object of the solution in accordance with the present invention is to provide considerable improvements as compared with the prior-art solutions. The object of the invention is above all to improve the construction of the heated roll so that the temperature profile of the heated roll in the transverse direction, relative the direction of running of the web, is as uniform as possible, whereby optimum calendering properties are achieved.

A further object of the solution in accordance with the invention is to eliminate any deformations of the end part by feeding of cold liquid from the ends. In the roll in accordance with the present invention, the problems caused by uneven temperature profile in the prior-art solutions have been solved by means of even introduction of heat and by means of local corrections of temperature by introducing cold liquid through the axle journals. Uniform spraying of liquid is theoretically the correct solution when it is desirable to obtain an even temperature profile, and the shape of the end can be regulated by means of the feed of cold liquid.

A further object of the invention is a solution that has a favourable cost of manufacture and a simple construction.

In addition to various calender applications, the solution in accordance with the present invention can also be applied to the drying cylinders in the drying section of a paper machine.

By means of the solution in accordance with the invention, a considerable improvement is achieved in respect of the drawbacks stated above. In view of achieving this, the solution in accordance with the invention is characterized in what is stated in the characterizing part of claim 1.

Other advantageous features of the invention will be described in claims 2 to 9.

In the following, the invention will be described in detail with reference to the accompanying drawings.

Figure 1 shows the construction of a heated roll in the direction of running of the web.

Figure 2 is a cross-sectional view of a heated roll.

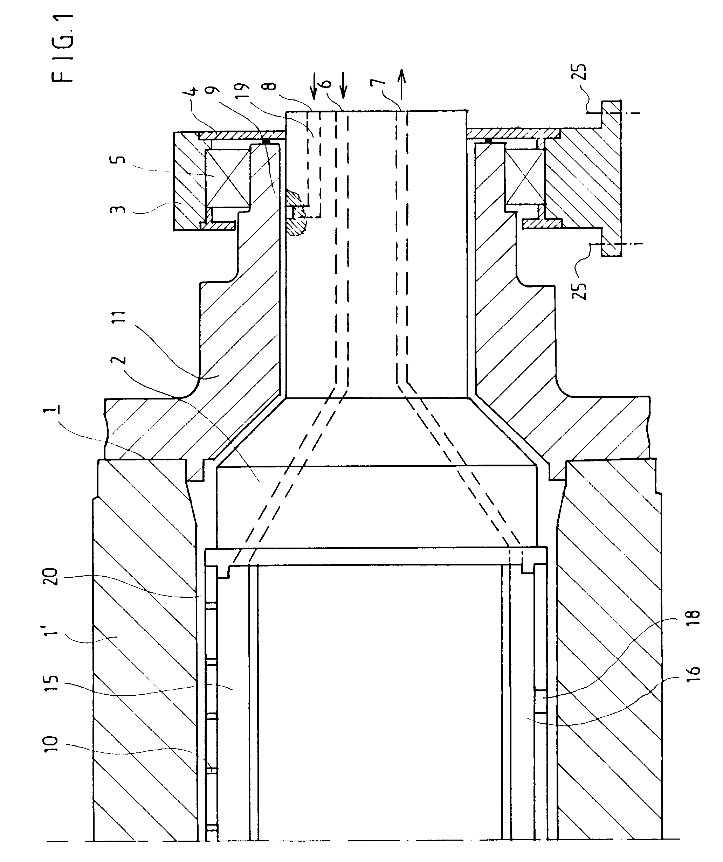

As is shown in Fig. 1, inside the cylindrical mantle 1′ of the heated roll 1, a stationary axle 2 is constructed, which is supported on bearing housings 3, to which the axle 2 is connected by the intermediate of support parts 4. The bearing housing 3 is fixed to the rest of the calender construction by means of fastening members 25. One end of the axle 2 is provided with an opening 6 for the supply of hot liquid, through which the hot liquid is fed into the chamber 15 and from there further into the nozzles 10. Moreover, the end of the axle 2 is provided with an outlet opening 7, through which the return liquid coming along the outlet chamber 16 is removed. At both ends of the axle 2, there are openings 8 for the supply of cold liquid, from which the liquid is passed along the duct 19 into the cooling nozzle 9. The space 20 between the axle 2 and the mantle 1′ is filled with liquid. In the axle 2, there are nozzles 10 as uniformly spaced, through which said nozzles the hot liquid is sprayed. The end journals 11 of the roll 1, which are manufactured as a welded construction or out of solid iron, support the mantle 1′ on the bearings 5. The inner axle 2 carries only the weight of the liquid and its own weight, and it is made of a plate cylinder or of some other, corresponding construction. Adjustable thermal insulations not shown in the figure) can be attached to the axle 2. The nozzles 10 placed on the axle 2, of which there may be several rows in the direction of the radius, spray a ring-shaped jet.

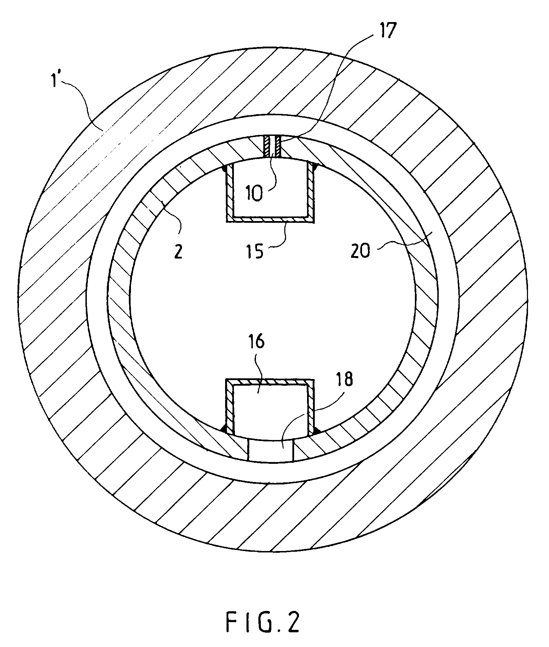

Fig. 2 illustrates the hollow inner axle 2 of the roll 1, in whose interior there is the hot-liquid chamber 15 attached by welding, which said chamber 15 communicates with the nozzles 10, through throttle pieces 17, and thereby with the space 20 between the mantle 1′ and the axle 2. The return liquid is passed out of the space 20 between the mantle 1′ and the axle 2 through the opening 18 into the outlet chamber 16.

Above, the invention has been described with reference to one preferred embodiment only. This is, however, not supposed to confine the invention to this particular example alone, but, as is obvious for a person skilled in the art, many variations are possible within the scope of the inventive idea defined in the following patent claims.

## Claims

1. Roll or cylinder for a paper machine or for a paper finishing machine, in particular a calender roll, which can be heated, said roll (1) comprises a cylindrical mantle (1') and a stationary axle (2) fitted inside said mantle (1'), on which said axle (2) nozzles (10) are installed, which spray liquid into a space (20) separating said mantle and said axle so as to produce a uniform temperature profile of adjustable level in the axial direction of the roll (1), **characterized** in that in both ends of said axle (2) are provided a feed opening (8), a duct (19) and a nozzle (9) for cold liquid for the cooling of the roll (1) ends, said space (20) communicating with said nozzle (9) for cold liquid, that the axle (2) comprises a feed opening (6) and a chamber (15) for hot liquid, by whose intermediate the hot liquid is passed into the nozzles (10) through throttle pieces (17), and that the axle (2) comprises a liquid outlet opening (7) and a liquid outlet chamber (16), by whose intermediate the cooled liquid can be removed out of the space (20) between the axle (2) and the mantle (1').

2. Roll as claimed in claim 1, **characterized** in that the axle (2) is supported on the bearing housings (3) by the intermediate of support parts (4).

3. Roll as claimed in claim 1 or 2, **characterized** in that, when the roll is in operation, the space between the axle (2) and the mantle (1') is filled with liquid.

4. Roll as claimed in any of the claims 1 to 3, **characterized** in that the roll (1) axle (2) is hollow.

5. Roll as claimed in any of the claims 1 to 4, **characterized** in that the nozzles (10) are installed in several axial rows, preferably in 3...6 symmetric rows, as uniformly spaced in the direction of the circumference of the roll (1).

6. Roll as claimed in any of the claims 1 to 5, **characterized** in that adjustable thermal insulations of the lateral areas are attached to the axle (2).

7. Roll as claimed in any of the claims 1 to 6, **characterized** in that the roll is used in various calendering applications as a heated roll or in the drying section of a paper machine as a drying cylinder.

## Patentansprüche

1. Walze oder Zylinder für eine Papiermaschine oder für eine Papieroberflächenbearbeitungsmaschine, insbesondere eine Kalanderwalze, die heizbar ist, wobei die Walze (1) einen zylindrischen Mantel (1') und eine innerhalb des Mantels (1') angebrachte feststehende Achse (2) hat, an welcher Achse (2) Düsen (10) montiert sind, die Flüssigkeit in einen, den Mantel und die Achse separierenden Raum (20) sprühen, um in Axialrichtung der Walze (1) ein gleichmäßiges Temperaturprofil mit einstellbarem Pegel zu erzeugen, **dadurch gekennzeichnet, daß** in beiden Enden der Achse (2) eine Zufuhröffnung (8), ein Leitungskanal (19) und eine Düse (9) für kalte Flüssigkeit für das Kühlen der Enden der Walze (1) vorgesehen sind, wobei der Raum (20) mit der Düse (9) für die kalte Flüssigkeit in Verbindung steht, **daß** die Achse (2) eine Zufuhröffnung (6) und eine Kammer (15) für heiße Flüssigkeit aufweist, mit deren Hilfe die heiße Flüssigkeit durch Drosselstücke (17) in die Düsen (10) geleitet wird, und **daß** die Achse (2) eine Flüssigkeitsauslaßöffnung (7) und eine Flüssigkeitsauslaßkammer (16) aufweist, mit deren Hilfe die gekühlte Flüssigkeit aus dem Raum (20) zwischen der Achse (2) und dem Mantel (1') entfernbar ist.

2. Walze gemäß Patentanspruch 1, **dadurch gekennzeichnet, daß** die Achse (2) mit Hilfe von Stützteilen (4) an den Lagergehäusen (3) abgestützt ist.

3. Walze gemäß Patentanspruch 1 oder 2, **dadurch gekennzeichnet, daß,** wenn die Walze in Betrieb ist, der Raum zwischen der Achse (2) und dem Mantel (1') mit Flüssigkeit gefüllt ist.

4. Walze gemäß einem der Patentansprüche 1 bis 3, **dadurch gekennzeichnet, daß** die Achse (2) der Walze (1) hohl ist.

5. Walze gemäß einem der Patentansprüche 1 bis 4, **dadurch gekennzeichnet, daß** die Düsen (10) in mehreren Axialreihen, vorzugsweise in 3 bis 6 symmetrischen Reihen, in Umfangsrichtung der Walze (1) gleichmäßig beabstandet montiert sind.

6. Walze gemäß einem der Patentansprüche 1 bis 5, **dadurch gekennzeichnet, daß** einstellbare thermische Isolierungen der Seitenbereiche an der Achse (2) angebracht sind.

7. Walze gemäß einem der Patentansprüche 1 bis 6, **dadurch gekennzeichnet, daß** die Walze bei verschiedenartigen Kalandrier-Anwendungen als eine beheizte Walze oder in der Trockenpartie einer Papiermaschine als ein Trockenzylinder verwendet wird.

## Revendications

1. Rouleau ou cylindre pour machine à papier ou pour machine de finissage de papier, en particulier cylindre de calandrage qui peut être chauffé, ledit rouleau (1) comportant une enveloppe cylindrique (1') et un axe fixe (2) logé à l'intérieur de ladite enveloppe (1'), sur ledit axe (2) étant installées des buses (10) qui pulvérisent un liquide dans un espace (20) séparant ladite enveloppe dudit axe de façon à produire un profil de températures uniforme à niveau réglable dans la direction axiale du rouleau (1), caractérisé en ce que les deux extrémités dudit axe (2) sont pourvues d'une ouverture d'alimentation (8), d'un conduit (19) et d'une buse (9) pour liquide froid pour le refroidissement des extrémités du rouleau (1), ledit espace (20) communiquant avec ladite buse (9) pour liquide froid, en ce que l'axe (2) comporte une ouverture d'alimentation (6) et une chambre (15) pour liquide chaud, par l'intermédiaire desquelles le liquide chaud est amené à pénétrer dans les buses (10) à travers des éléments d'étranglement (17), et en ce que l'axe (2) comporte une ouverture (7) de sortie de liquide et une chambre (16) de sortie de liquide, par l'intermédiaire desquelles le liquide refroidi peut être évacué de l'espace (20) entre l'axe (2) et l'enveloppe (1').

2. Rouleau selon la revendication 1, caractérisé en ce que l'axe (2) est supporté sur les logements (3) de paliers par l'intermédiaire de pièces de support (4).

3. Rouleau selon la revendication 1 ou 2, caractérisé en ce que, lorsque le rouleau est en fonctionnement, l'espace entre l'axe (2) et l'enveloppe (1') est rempli de liquide.

4. Rouleau selon l'une quelconque des revendications 1 à 3, caractérisé en ce que l'axe (2) du rouleau (1) est creux.

5. Rouleau selon l'une quelconque des revendications 1 à 4, caractérisé en ce que les buses (10) sont disposées sur plusieurs rangées axiales, de préférence sur trois à six rangées symétriques, espacées de manière uniforme dans la direction du pourtour du rouleau (1).

6. Rouleau selon l'une quelconque des revendications 1 à 5, caractérisé en ce que des moyens d'isolation thermique réglables des zones latérales sont fixés à l'axe (2).

7. Rouleau selon l'une quelconque des revendications 1 à 6, caractérisé en ce que le rouleau est utilisé comme rouleau chauffé dans diverses opérations de calandrage ou comme cylindre de séchage dans le poste de séchage d'une machine à papier.
